# EUROPEAN PATENT APPLICATION

(11) **EP 3 330 666 A1**
(43) Date of publication of application: **06.06.2018**
(21) Application number: 16201572.1
(22) Date of filing: 30.11.2016
(51) Int. Cl.: G01C 21/20, G01C 21/00

(54) **A COMMUNICATION APPARATUS FOR ADAPTING AN ACTUAL ROUTE OF A VESSEL**

(71) Applicant: Offshore Navigation Limited, 2640 George Hill (AI)
(72) Inventor: Dokken, Sverre, 3071 Limassol (CY)
(74) Representative: Patentship Patentanwaltsgesellschaft mbH

(57) **Abstract**

The disclosure relates to a communication apparatus (100) being configured to adapt an actual route of a vessel in dependence of actual measurement parameters to achieve at least one optimization goal, the actual measurement parameters and the optimization parameter being arranged to form an actual parameter vector. The communication apparatus (100) comprises: a data base (101) being configured to provide a plurality of stored vessel routes, each stored vessel route being associated with reference measurement parameters and optimization result achieved along the stored route with the reference measurement parameters, the reference measurement parameters and the optimization results forming a stored parameter vector; an interface (102) for receiving the actual measurement parameters; and a processor (103) being configured to compare the actual parameter vector with the stored parameter vector and to determine an optimum route upon the basis of the comparison, the processor being further configured to change the actual route towards the optimum route to obtain an adapted route.

## Description

The work leading to this invention has received funding from the European Union's Seventh Framework Program (FP7/2007-2013) under grant agreement n°607371.

### TECHNICAL FIELD

In general, the present disclosure relates to determining a route of a vessel.

### BACKGROUND

It was not until mid-19^{th} century that the first climatology of ocean weathers and currents of the world became available, which allowed a navigator to plan a ship's voyage in a more optimized way along seasonally recommended routes containing favorable weather conditions. As weather predictions became improved with the advancements in meteorology, now weather routing has become a full grown discipline that strives to provide an optimum track for ocean voyages based on forecasts of weather and sea conditions along a particular transit, taking into account a ship's individual characteristics (size, speed capability, cargo load, etc.) and the optimization wishes of the ship's operator such as maximum safety and crew comfort, minimum fuel consumption, minimum time underway, or any combination of these and other needs that are affected by meteorological and oceanographic (metocean) conditions.

However, as economic pressures are increasing and environmental regulations are becoming strict, shipping companies are looking for other means to cut fuel consumption and air emissions. In this respect, traditional weather routing has reached its limits being based solely on (uncertain) weather model forecasts and climatological sources such as Pilot Chart Atlases, the Sailing Directions (Planning Guides) and historical weather data tables. Advanced voyage optimization systems are now needed that use state of the art technology to supplement where traditional weather routing is lacking. Such advanced systems will take into account ship response, engine overload, speed management, Revolutions Per Minute (RPM) versus speed management and additional weather data sources beyond forecast models.

The maritime industry is facing great challenges to increase its energy efficiency and decrease its environmental impact as a result of economic pressure and strict environmental regulations. Methods for reducing fuel consumption and its related (pollutive) air emissions are urgently needed. According to a comprehensive survey the most valuable measures to reduce fuel consumption are those that are straightforward and easy to implement, for which weather routing and voyage optimization (generally referred to as sail planning systems) are among the top two.

The construction of an optimization method relies on the choice of optimization algorithm. The exact structure may vary but will most often hinges on the algorithm's way of sampling solutions. The choice of algorithm has a crucial effect on the type of solutions, its quality, and computation time. In the maritime community the most common algorithms are: Dijkstra Algorithm, Dynamic Programming, and Genetic Algorithm (GA), in addition to those traditional used algorithms for traffic optimization such as Calculus of Variation, Isochrone method, and Isopone method. The conventional Dijkstra algorithm can always find the most optimal route from the given grids. For cases of constant speed and handling of ship motions through reduction curves only, the algorithm is fast. Possible routes are restricted to move along nodes of the grid and thus highly grid dependent. Modifying the algorithm for handling dynamic weather, essential for varying speed, may be complex. Finally, one of the greatest limitations of the algorithm for routing optimization is that the routing plan for both expected/minimum time of arrival and minimum fuel consumption have to be taken into account by a single objective cost function.

The modern dynamic programming algorithm also relies on a predefined grid. Impassable areas may be easily handled by skipping grid points. The preprocessed grid may be created relatively simple by spreading grid points out perpendicularly at intervals following the great circle route. A secondary advantage of the method lies in a byproduct resulting from the nature of the solution space, which produces optimal routes for different arrival times, thus allowing the user an active selection. While this method shows the advantage of easily handling impassable areas, finding the shortest route around or between e.g. islands requires significant grid fineness. This makes the accuracy of the result highly dependent on the grid fineness, which directly couples to the required computation time.

Previous studies for voyage planning are able to optimize for different objectives such as expected arrival times, minimum fuel consumption, ship responses, etc. Different optimization algorithms (Dynamic programming, Isochrone, Genetic algorithm etc.) are implemented into different systems. Most of them claim that the calculation time for a typical route can be finished in less than a minute. Nowadays, an open interface to receive weather forecast (both deterministic and ensemble) from different meteorological institutes is the focus of the research and development field. Ship specific response model integrated into the actual routing system plays a more important role in the future improvement to consider e.g. parametric roll, high frequency vibrations, large motions related cargo loss etc.

The top weather routing software has the possibility of routing with varying speed or power profiles, enabling ships to speed up or slowdown in order to avoid constraining weather. Constraints in this context are operation limiting criteria. The handled motion constraints are surf-riding, synchronous roll, parametric roll and reduction of intact stability. This is done following revised guidelines of International Maritime Organisation (IMO), leading to maximum conditions. These methods have been criticized for being too simple. The lack of proper estimative equations has lead the way for the development of analytic ship performance based routing. Weather constraints can be also handled through the modelling of ship motions under sea.

On the other hand, most of the maritime industry is currently not utilizing any type of sail planning system to help reduce fuel consumption and air emissions. This comes from the fact that while there are several potential solutions available, there is no uniform, standardized procedure to evaluate fuel or emission gain (or loss) by implementing one or another of these solutions. Hence, it is impossible for maritime community to know if a vessel saves more fuel or emissions by integrating solution X or solution Y. This lack of comparative power hinders a successful integration of new energy-efficiency innovations into the shipping industry and consequentially lessens the industry's ability to adapt their operations into becoming more cost effective, more environmental friendly and more energy efficient.

In light of the above, there is a need for more efficiently determining a route of a vessel.

### SUMMARY

It is an object of the disclosure to provide a more efficient concept for determining a route of a vessel.

This object is achieved by the features of the independent claims. Further implementation forms are apparent from the dependent claims, the description and the figures.

The disclosure is based on the finding, that the above mention object can be achieved by a communication apparatus and a corresponding method, which in particular leverage assistance of multiple observational capabilities, such as numerical weather forecasts, remote data from satellites, coastal stations, buoys, aircrafts, etc., and local in-situ observations from a ship itself and neighboring ships, in order to generate or provide an optimal ship route.

To meet the industry's need for new and better energy efficient shipping solutions, an innovative and complete Sail Planning System (SPS) is described in the present disclosure, incorporating both weather routing and voyage optimization. This Sail Planning System (SPS) offers multi-objective route optimization through unique observational capabilities and advanced computational models based on space-born data, with all its services delivered in a comprehensive and user-friendly way. As such, the Sail Planning System (SPS) promises to drastically improve upon fuel consumption and air emissions as well as deliver a high percentage of correct ETA (Estimated Time of Arrival), increase shipping safety, extend vessel service life and reduce total operational costs while boosting overall operational efficiency.

According to a first aspect the disclosure relates to a communication apparatus being configured to adapt an actual route of a vessel in dependence of actual measurement parameters to achieve at least one optimization goal, the actual measurement parameters and the optimization parameter being arranged to form an actual parameter vector, wherein the apparatus comprises: a data base being configured to provide a plurality of stored vessel routes, each stored vessel route being associated with reference measurement parameters and optimization result achieved along the stored route with the reference measurement parameters, the reference measurement parameters and the optimization results forming a stored parameter vector; an interface for receiving the actual measurement parameters; and a processor being configured to compare the actual parameter vector with the stored parameter vector and to determine an optimum route upon the basis of the comparison, the processor being further configured to change the actual route towards the optimum route to obtain an adapted route.

In a first possible implementation form of the communication apparatus according to the first aspect, the processor is configured to correlate the actual parameter vector with stored parameter vectors in order to determine a selected parameter vector, the selected parameter vector correlating more with the actual parameter vector than another pre-stored parameter vector, and wherein the processor is configured to select the optimum route associated with the selected parameter vector.

In a second possible implementation form of the communication apparatus according to the first aspect or the first implementation form thereof, each stored vessel route and/or optimization result is determined upon the basis of executing a different computer route model with the reference measurement parameters as input parameters or empirically determined routes.

The models can be provided as described in the publications "Statistical models for the speed prediction of a container ship", Wengang Mao et al, Ocean Engineering 126 (2016) 152-162, and "Machine learning to predict a ship's fuel consumption in seaways", Wengang Mao et al, Proceedings of PRADS2016, 4th - 8th September, 2016, Copenhagen, Denmark, disclosure of which is incorporated herein.

In a third possible implementation form of the communication apparatus according to the first aspect or any one of the first to second implementation form thereof, the optimization goal comprises at least one of the following parameters: fuel consumption reduction, emission reduction, travel time reduction, heavy whether avoidance, fatigue/structural stress optimization or a combination thereof, and wherein a respective optimization result comprises fuel consumption, emission, travel time, heavy whether indication or a combination thereof.

In a fourth possible implementation form of the communication apparatus according to the first aspect or any one of the first to third implementation form thereof, the stored vessel routes are associated with different optimization results

In a fifth possible implementation form of the communication apparatus according to the first aspect or any one of the first to fourth implementation form thereof, the actual measurement parameters and/or the reference measurement parameters comprise at least one of the following parameters: Earth Observation parameters, in particular metocean parameters such as ocean current speed and direction along a respective route, sea ice extent and/or concentration along a respective route, wave indication along the respective route, wind indication along the respective route, or travel time, or fuel consumption, or emissions, or hydro dynamic parameters or vessel specific parameters, in particular vessel dimension, fuel type load conditions, speed, position, engine characteristic, ocean currents (speed/direction), ocean waves (spectrum or period/direction/height), wind (speed/direction), ice drift (speed/direction), ice concentration, and automatic identification of ships (position, speed, heading, departure location, arrival location, MSCI number, and more).

In a sixth possible implementation form of the communication apparatus according to the first aspect or any one of the first to fifth implementation form thereof, the actual route is a shortest path route.

In a seventh possible implementation form of the communication apparatus according to the first aspect or any one of the first to sixth implementation form thereof, the interface is considered to transmit information on the adapted route towards the vessel.

In an eighth possible implementation form of the communication apparatus according to the first aspect or any one of the first to seventh implementation form thereof, the processor is configured to execute a plurality of different computer route models with the reference measurement parameters as input parameters to determine the optimization results.

In a ninth possible implementation form of the communication apparatus according to the first aspect or any one of the first to eighth implementation form thereof, the processor is configured to determine at least one optimization result for the actual route with the actual measurement parameters, and to store the optimization result in the data base for the actual route forming a stored route for future optimizations.

In a tenth possible implementation form of the communication apparatus according to the first aspect or any one of the first to ninth implementation form thereof, the actual parameter vector comprises a plurality of different optimization goals, and wherein the processor is configured to weight the at least one of the optimization goals, in particular according to a user preference.

In a eleventh possible implementation form of the communication apparatus according to the tenth implementation form of the first aspect, the interface is configured to receive the user preference and at least one optimization goal.

In a twelfth possible implementation form of the communication apparatus according to the first aspect or any one of the first to eleventh implementation form thereof, the processor is configured to continuously determine and/or continuously update a difference, in particular a measured and/or updated difference, between actual and expected performance of the sail route of the vessel, upon the basis of at least one of the following parameters: actual arrival-times, fuel-consumption, emissions.

In a thirteenth possible implementation form of the communication apparatus according to any one of the third to twelfth implementation form of the first aspect, the processor is configured to determine whether a fuel/emission reduction parameter is more favorable than another fuel and/or emission reduction parameter, and to use the determined fuel and/or emission parameter to provide the most energy efficient solutions, in particular vessel route.

In a fourteenth possible implementation form of the communication apparatus according to the first aspect or any one of the first to thirteenth implementation form thereof, local actual observations along the vessel route is used to adjust model outputs and to reset the initial state of the models into more accurate values for minimizing forecast errors, wherein the model adjustment is performed by controlling the forecast models' nowcast to actual in-situ observations, wherein a quality controlling feedback-loop mechanism is used together with the adjusted forecasts and several different forecast models to reduce the errors of weather forecast and meteorological and oceanographic forecast.

In a fifteenth possible implementation form of the communication apparatus according to the first aspect or any one of the first to fourteenth implementation form thereof, any number of sub-models, in particular from several providers or research and development centers, can be included into the process for calculating at least one optimization vessel route, in particular sail plan route, wherein the sub-models are operable in parallel and are configured to respond to the continuous input of actual observational data.

In a sixteenth possible implementation form of the communication apparatus according to the first aspect or any one of the first to fifteenth implementation form thereof, a spectrum, in particular a full spectrum, of data is provided by a multitude of sensors and is included in the actual parameter measurements.

The inherent characteristics of observation data are determined by the specific design of the sensor used to obtain the data, wherein use of a multitude of sensors providing a full spectrum of data and data characteristics, compensates the disadvantage of one sensor by the advantages of another.

In a seventeenth possible implementation form of the communication apparatus according to the first aspect or any one of the first to sixteenth implementation form thereof , observational data measurements from earth observation satellites are included into the actual parameter measurements to reduce the sensitivity of meteorological and oceanographic model errors and weather forecast errors.

In an eighteenth possible implementation form of the communication apparatus according to the first aspect or any one of the first to seventeenth implementation form thereof, the processor is configured to utilize, in particular large quantities, of at least one of the following data: satellite earth observation data, onboard ship measurement data, in-situ buoys data, to correct and adjust the most reliable weather forecast information.

According to a second aspect the disclosure relates to a method of adapting an actual route of a vessel in dependence of actual measurement parameters to achieve at least one optimization goal, the actual measurement parameters and the optimization parameter being arranged to form an actual parameter vector. The method comprises: providing a plurality of stored vessel routes by a data base, each stored vessel route being associated with reference measurement parameters and optimization result achieved along the stored route with the reference measurement parameters, the reference measurement parameters and the optimization results forming a stored parameter vector; receiving the actual measurement parameters; and comparing the actual parameter vector with the stored parameter vector and to determine an optimum route upon the basis of the comparison, the processor being further configured to change the actual route towards the optimum route to obtain an adapted route.

The disclosure can be implemented in hardware and/or software.

### BRIEF DESCRIPTION OF THE DRAWINGS

Further embodiments of the disclosure will be described with respect to the following figures, wherein:
Figure 1 shows a schematic diagram of a communication apparatus comprising a database, an interface, and a processor for achieving at least one optimal sailing plan or route according to an embodiment;
Figure 2 shows a schematic diagram of a Sail Plan System (SPS) for energy efficiency shipping according to an embodiment;
Figure 3 shows a schematic diagram of an Offshore or Onshore Repository Center (ORC) approach according to an embodiment;
Figure 4 shows a schematic diagram illustrating how the disclosure realizes an optimal ship route by integrating a Sail Plan System (SPS), with different sources of observational data, improved performance models, and the MPMA/feedback approach according to an embodiment;
Figure 5 shows a schematic diagram of a common fuel consumption estimation model (FCM) according to an embodiment;
Figure 6 shows a schematic diagram illustrating a data flow between ships, observation platforms and an On-shore Repository Center (ORC) according to an embodiment;
Figure 7 shows a schematic diagram of the main modules of the sail plan optimizer at the On-shore Repository Center (ORC) according to an embodiment;
Figure 8 shows a list of satellite sensors included in the actual SPS system (non-exhaustive list) according to an embodiment;
Figure 9 shows a schematic diagram illustrating how Earth Observation (EO) data can be integrated and utilized in the SPS system according to an embodiment;
Figure 10 shows a schematic diagram of a functionality of the Data Selection Algorithm (DSA) according to an embodiment;
Figure 11 shows a schematic diagram illustrating a workflow of a Model Performance Monitoring and Analysis (MPMA) module according to an embodiment;
Figure 12 shows a schematic diagram of a method for adapting an actual route of a vessel in dependence of actual measurement parameters to achieve at least one optimization goal according to an embodiment.

In the various figures, identical reference signs will be used for identical or at least functionally equivalent features.

### DETAILED DESCRIPTION OF EMBODIMENTS

In the following description, reference is made to the accompanying figures, which form part of the disclosure, and in which are shown, by way of illustration, specific aspects in which the present disclosure may be placed. It will be appreciated that other aspects may be utilized and structural or logical changes may be made without departing from the scope of the present disclosure. The following detailed description, therefore, is not to be taken in a limiting sense, as the scope of the present disclosure is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present disclosure covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

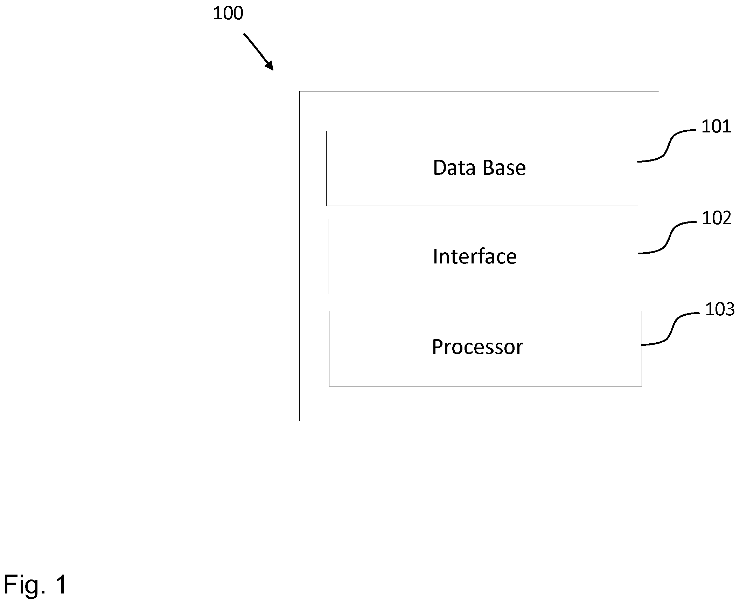

Figure 1 shows a schematic diagram of a communication apparatus 100 comprising a database 101, an interface 102, and a processor 103 for achieving at least one, e.g. optimal or preferred, sailing plan or route according to an embodiment.

The communication apparatus 100 is configured to adapt an actual route of a vessel in dependence of actual measurement parameters to achieve at least one optimization goal, wherein the actual measurement parameters and the optimization parameter are arranged to form an actual parameter vector.

As can be taken from the detailed view of the communication apparatus 100 shown in figure 1, the communication apparatus 100 comprises a database 101, an interface 102, and a processor 103.

The data base 101 is configured to provide a plurality of stored vessel routes, wherein each stored vessel route is associated with reference measurement parameters and optimization result achieved along the stored route with the reference measurement parameters, wherein the reference measurement parameters and the optimization results form a stored parameter vector.

The interface 102 can receive the actual measurement parameters, such as Earth Observation (EO) parameters, in particular metocean parameters such as ocean currents, ocean wave indication along the respective route, wind indication along the respective route, sea ice extent and/or concentration and/or drift along a respective route or travel time, or fuel consumption, or emissions, or hydro dynamic parameters or vessel specific parameters, in particular vessel dimension, fuel type load conditions, speed, position, engine characteristic.

The processor 103 is configured to compare the actual parameter vector with the stored parameter vector and to determine an optimum route upon the basis of the comparison, wherein the processor is further configured to change the actual route towards the optimum route to obtain an adapted route.

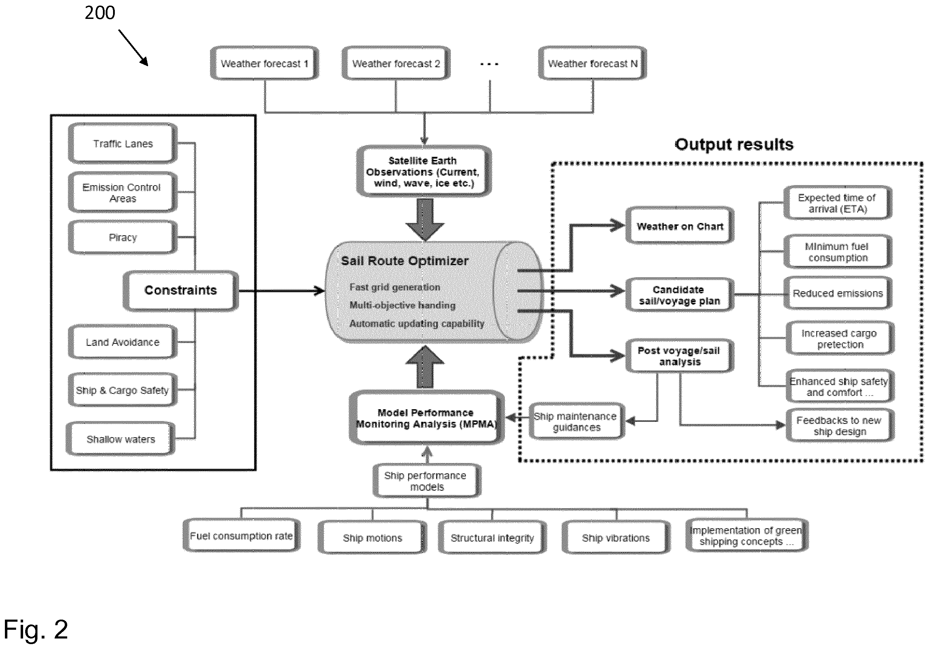

Figure 2 shows a schematic diagram of a Sail Plan System (SPS) 200 for energy efficiency shipping, integrated with different sources of weather forecasts calibrated by Earth Observation (EO) data and improved ship performance models by the collected onboard and EO data through the MPMA/feedback approach according to an embodiment.

The SPS service concept consists of providing the end-user, a fleet captain, fleet manager, etc., with a sail plan that guides ships in how to sail from one port to the next in an optimum way, where optimum can mean any single or several combined user-desired objective(s) like minimum fuel consumption, fastest arrival time, safest voyage, etc., supplemented with additional information and automations that help to make overall ship management operations more efficient.

To perform its service tasks, SPS 200 includes a four component set-up, providing an opportunity to expand above and beyond the basic functionalities offered by competitive systems, by incorporating the latest technical innovations and automations, by scaling the system for a large number and great diversity of input and by including overall system optimization routines, as to have its basic functions become more robust, more efficient, self-upgrading and more user friendly as well as to expand upon those basic functions by widening its optimization versatility. As such, SPS 200 provides a complete service that will fully accommodate actual day operational needs of shipping masters, by operationalizing both weather routing and voyage optimization theory using the most advanced and innovated technologies available. In that sense, the SPS sail plan service contains the following major innovative technologies/modules which make it the most performant system among all other systems currently out on the market:
- Infrastructure: State-of-the-art central repository with communication links that can efficiently handle and transfer extensive weather/sea-state (ship-external) datasets from various weather/metocean modules, satellites, buoys, surrounding vessels, etc. and that can deliver the optimized (real-time/actual) sail plan to the end-user.
- Input data: Multi-platform and multi-sensor input observations (satellite, coastal-stations, waterborne), with the specific inclusion of EO satellite data, to record a ship's encountered sea environments and her real-time operational performances in high special and temporal resolution
- Optimization model: A framework of modules and sub-models that create a "feedback-loop" or self-learning/upgrading system by monitoring ship behaviour and routing performance during and after its voyage as well as by performing input data quality and applicability check; Numerical ship performance algorithms that are not only fed with theoretical calculations but also with a-priori input data to have better continuous estimations of performances (fuel, emissions, stability, etc.); Real-time sail plan optimization for any vessel by combining the self-upgrading ship performance modules directly with the advanced routing optimization algorithms.
- Interface: A graphical user interface to communicate and to display in a user-friendly way the actual, predicted and estimated fuel cost, time left for arrival etc., in addition to the most recent weather/metocean forecast information.

The SPS sail plan concept, presented in figure 2, is geared to provide a complete and user-friendly 24/7 automated surveillance and sail plan service through a robust combination of weather routing and ship voyage optimization obtained by a combination of models and sub-models ingested with ship specific parameters (such as yaw, pitch, roll, sailing speed, GPS position, structural stress, engine parameters, drift, loading condition, wetness, etc.), real-time multi-sensor and satellite observations and forecast data, structured in a way to approximate the operational conditions of the serviced ship and combined with a feedback-loop set-up for system performance upgrading. It consists of the most optimal route with respect to minimum fuel consumption, lowest air emissions, Expected Time of Arrival (ETA), sailing course, ship speed, engine power output, structural service life, etc., for a given voyage, and added ship's operational performance data and environment data for automated and more efficient ship management.

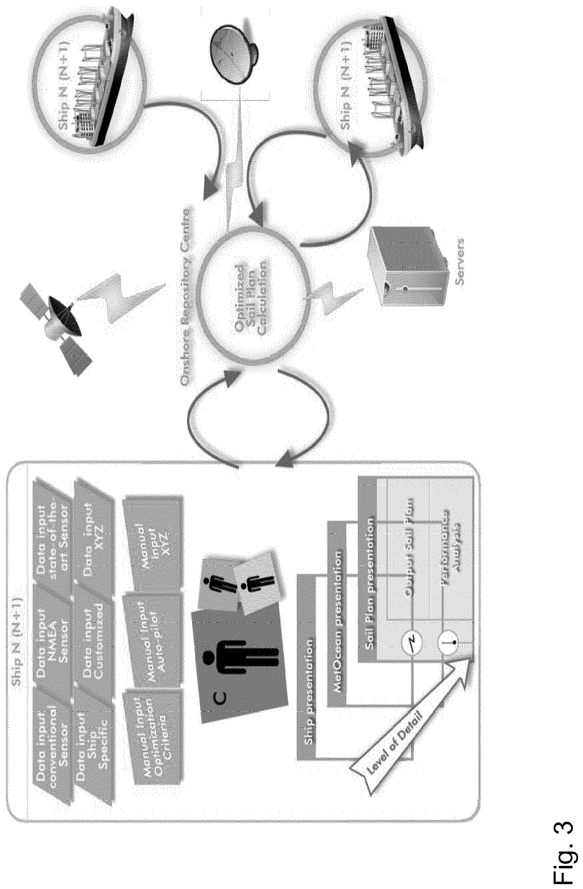

Figure 3 shows a schematic diagram of an Offshore or Onshore Repository Center (ORC) approach according to an embodiment, wherein the ORC communicates with ships and local and remote observations platforms in order to receive extensive observations for the calculated sail plan, which is continuously and in real-time sent to ships to be displayed in their Graphical User Interface (GUI) as an aid for the on-board decision makers.

The solution concept as presented above is developed into the SPS system 200. How the system works in practice is describes as follows:
- The end user, i.e. ship manager, fleet manager, fleet captain, or sailing captain, who manages one or more ships will prior to departure consider several optimization criteria when planning ship routes.
- Once the optimization criteria together with the sail plan (start, stop and way-points) have been established they are sent using a Graphical User Interface (GUI) over the ship's communication system to the Onshore Repository Centre (ORC).
- The ORC itself is configured to continuously receive (prior and during sailing) all available numerical weather forecasts and remote observations (from satellites, coastal stations, buoys, aircrafts, other ships connected to the ORC, etc.) for the area and anticipated times along the envisioned voyage. It also receives in-situ observations from and about the ship platform itself, (e.g., conventional radar, Doppler log, yaw, pitch, roll, structural stress, engine parameters, drift, currents, waves, wind, loading condition, etc.) as well as its navigational information (speed and heading, GPS position, etc.).
- At the ORC, the input information is processed by the 'Data Selection Algorithm' (DSA), several sub-modules (e.g. fuel consumption model, metocean model, hydrodynamic model, etc.) and a route optimization algorithm into an optimized sail plan.
- The optimized sail plan containing all way-points is sent back to the ship via satellite communication links like Very Small Aperture Terminal (VSAT) and Broadband Global Area Network (BGAN).
- The on-board GUI will display the optimized plan together with all relevant information used to justify the specific sail plan choice (for example the presence of a storm system, dangerous wave zones, security issues and other relevant information like 'interpreted' satellite observations).
- The sea master evaluates the proposed optimization of the sail plan and can then simply reject the plan or acknowledge it for autopilot execution.
- While the master mariner or navigation officer monitors the optimum sail plan during the voyage, the information at the ORC is continuously enhanced with updated observation data inputs and with data on the actual sail plan performance that comes from the 'Model Performance Monitoring and Analysis' (MPMA) module which continuously measures the differences between actual (e.g. actual arrival-times, fuel-consumption, emissions, etc.) and expected performances of the sail plan and uses these differences to better estimate future routes. The MPMA module will be described in detail below.
- Through the continuous stream of updated information and model performance feedback the ORC is able to continuously re-calculate/update/enhance the sail plan which is again sent to the ship for acceptance or rejection and autopilot execution.
- After arrival, a post voyage analysis is made based on near real-time and historical EO data, providing information on the ship's status for educating master mariners or navigation officer for future sailing and also for structural inspection and maintenance planning. The same data can also enable the entire SPS system 200 to be 'trained' by machine learning extracting the correlation information of the MPMA module for even more reliable future sail planning contributing even less fuel consumption and emissions.
- In the end, all information can be fed back to the ship management plan and ultimately can be used for possible new ship designs with better performance.

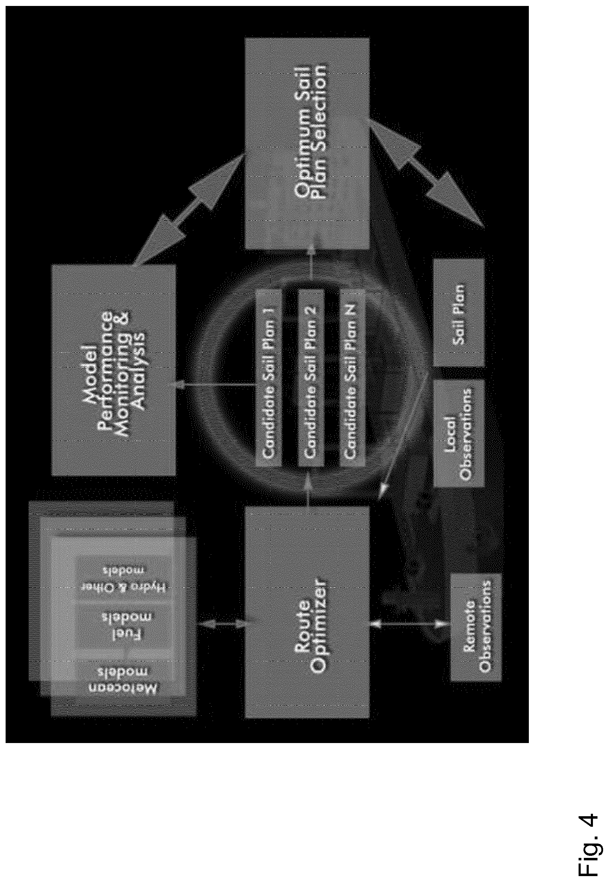

Figure 4 shows a schematic diagram illustrating how an optimal ship route or plan is achieved by the disclosure according to an embodiment.

The disclosure realizes an optimal ship route by integrating a Sail Plan System (SPS) 200 for energy efficiency shipping, with different sources of observational data, numerical weather forecasts calibrated by Earth Observation (EO) data and improved ship performance models by the collected onboard and EO data through the MPMA/feedback.

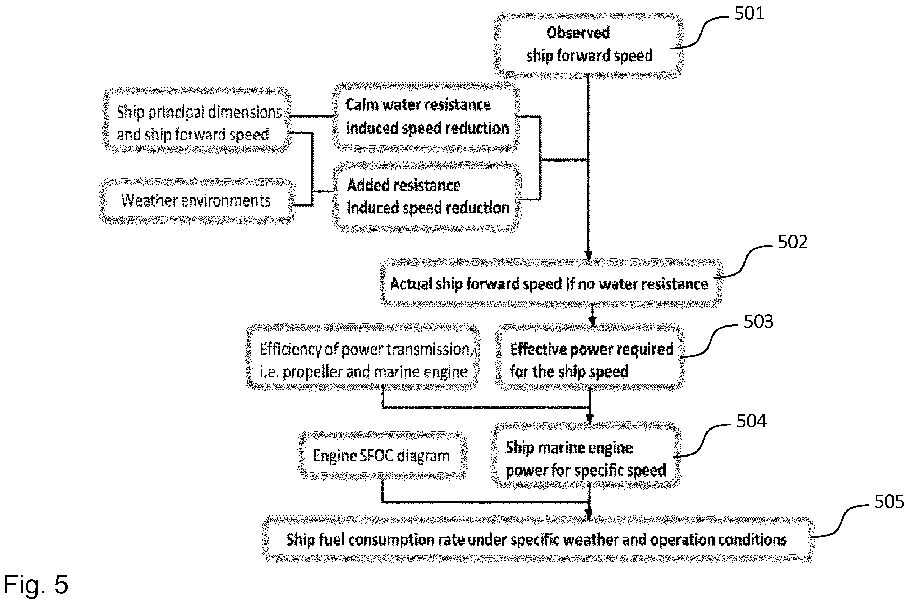

Figure 5 illustrates an embodiment of a common fuel consumption estimation model (FCM) to estimate the fuel consumption based on semi-empirical and theoretical methodologies.

The power of the FCM lies in its ability to provide accurate estimates of a ship's real fuel consumption under various operational conditions and in its open and standardized design allowing the module to be installed on any ship. As such the FCM as a standalone module allows for benchmarking the performance of any ship as well as allows for the comparison those performances between ships. Because today's shipping market has shifted its focus from optimized Estimate Time Arrival (ETA) towards energy efficiency, such as reduced fuel consumption and air emissions, the need for an FCM has become obvious. The FCM can be used to evaluate if the implementation of one fuel/emission saving solution is more favorable than another, driving the shipping industry towards adoption of the most energy efficient solutions. The workings of the FCM are detailed in the following paragraphs.

The estimation methods used in an FCM can range from the most basic speed/power relation theories to the complex consideration of long-term on-board monitoring measurements and Computational Fluid Dynamics (CFD) methods. The used complexity is usually determined by the amount of available information. The degree of detail of available information determines the precision by which fuel consumption is estimated, but a reliable model which can predict a relative relationship between fuel cost and a ship's operational environments is often sufficient to produce a routing plan with minimum fuel consumption. In this case the FCM equates to an explicit formula which is used to estimate the fuel consumption rate using parameters of encountered weather information, ship characteristics and its operational profile.

The procedure for estimating the fuel consumption, as shown in figure 5, comprises the following steps.

Step 501: The model starts from the ship's actual observed forward speed. This speed is the result of an actual (theoretical) speed reduced by resistances coming from the water body itself, coming from waves pushing against the ship and from the wind.

Step 502: All resistances together form the total resistance which is a function of a ship's dimensions, the actual metocean conditions and the ship's forward speed. The total resistance is used to transform the observed speed to the actual speed of the ship if no resistance were to be present.

Step 503: The obtained actual speed provides an idea of the power required to move the ships mass at that speed, as called the effective power.

Step 504: However, because of power transfer loss from a ship's engine to the drive shaft, from the shaft to the propeller and again from the propeller to the water which provides the actual forward thrust, the ship's engine has to deliver more power than the effective power. The power reduction from the drive shaft to the propeller is determined by e.g. hull efficiency, propeller efficiency and shaft efficiency, while the shaft power itself is generated from the ship's engine with a power reduction called the engine efficiency. All the efficiencies are usually provided by the engine and propeller manufacturers based on their extensive testing, but they may need some adjustment based on full-scale operational tests.

Step 505: As a last step to go from engine required power output to fuel burning rates, the Specific Fuel Oil Consumption (SFOC) is used to describe the fuel efficiency of an engine design with respect to power output. The SFOC is also provided by the ship's engine manufacturer.

The global oceanic circulations and tidal currents are also of critical importance to the optimized routing plan however not directly translated as resistance. Circulation and current impact on fuel cost is more often represented through the parameter of forward ship speed. For example, if a current has the same direction as a ship's navigation direction, the ship's speed over ground will increase and the total sailing time is decreased consequently. This means less fuel consumption in comparison with situation without current. All these environmental weather data have been implemented in the SPS sail plan system 200 for the optimized schedule and fuel reduction of a ship's route.

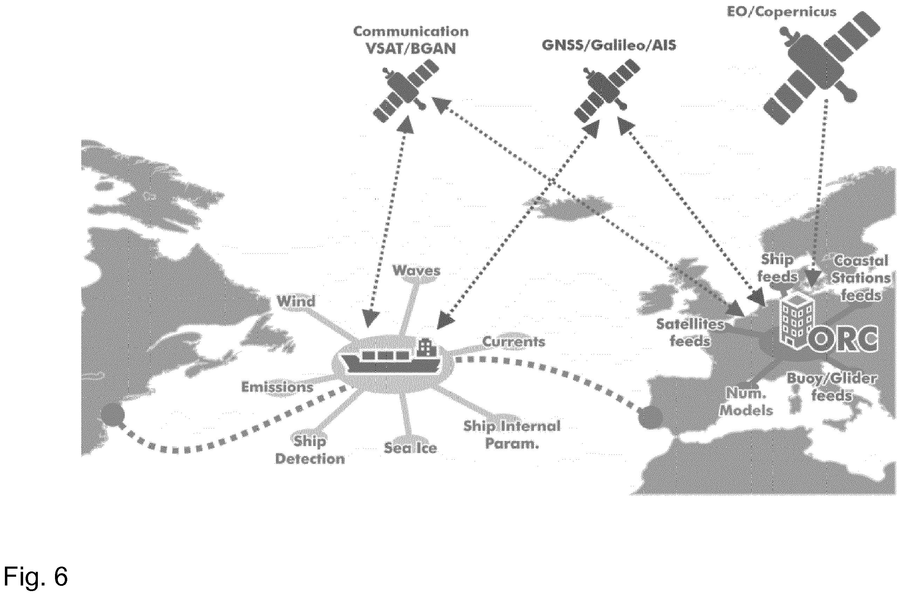

According to an embodiment, the data flow between ships, observation platforms and a SPS On-shore Repository Centre (ORC) is shown in figure 6. Figure 6 illustrates a schematic diagram of an On-shore Repository Centre (ORC) collecting Earth Observation (EO) information from earth observation satellite systems, such as the Copernicus system, and other sources, including position data from Global Navigation Satellite Systems (GNSS) and Automatic Information Systems (AIS).

At the ORC, the information is processed and distributed to the end users via satellite communication links like VSAT (Very Small Aperture Terminal) and BGAN (Broadband Global Area Network). Observations collected on the connected ships will also be used as input to the ORC processing chain hosting the sail plan models. The ORC is a shore based computing center and can be seen as the heart of SPS 200 as it is the place where all system components are connected through a high quality routing service. Having a centralized IT infrastructural set-up provides numerous advantages over an on-board set-up, particularly since access to information and processing power/storage is always greater ashore than offshore, which provides a competitive advantage over several market competitors.

Firstly, the use of the ORC allows SPS 200 to be mainly an automatic unmanned system. The end-users are normally located on the ships and/or in the end-user fleet management headquarter where they use a custom designed graphical user interface (GUI) that gives them remote access through a web portal to the ORC where all information provided by the system is centralized. System administration, system update and maintenance, and general problem-solving when assisting Product Delivery to the end-users, is done by a special class of super-users that can access admin sub-systems like System Control, User Management, Web Portal, Remote Access, System Log Monitoring and Communication Management.

Secondly, the ORC enables access to an excessive amount of data by connecting to data feeds from a plurality of platforms (satellites, airborne, coastal stations, gliders, buoys, ships, etc.) and sensors (radar, infrared, thermal, optical, radiometers, etc.) as well as collect weather forecast data and positioning data from Global Navigation Satellite Systems (GNSS) and Automatic Information Systems (AIS).

Thirdly, by hosting all sub-models, optimization algorithms and self-learning procedures that process, interpret and evaluate the data inputs and model outputs, the ORC enables a smooth, efficient and fast data processing chain.

Fourthly, to avoid any scaling problems with respect to an increased processing demand, the ORC is part of the GRID and cloud-based processing network, shared across the Earth Science community, which provides virtually unlimited computing power for processing any amount of data.

Lastly the ORC allows for a centralized distribution of all outputs to the end users via satellite communication links like VSAT (Very Small Aperture Terminal) and BGAN (Broadband Global Area Network).

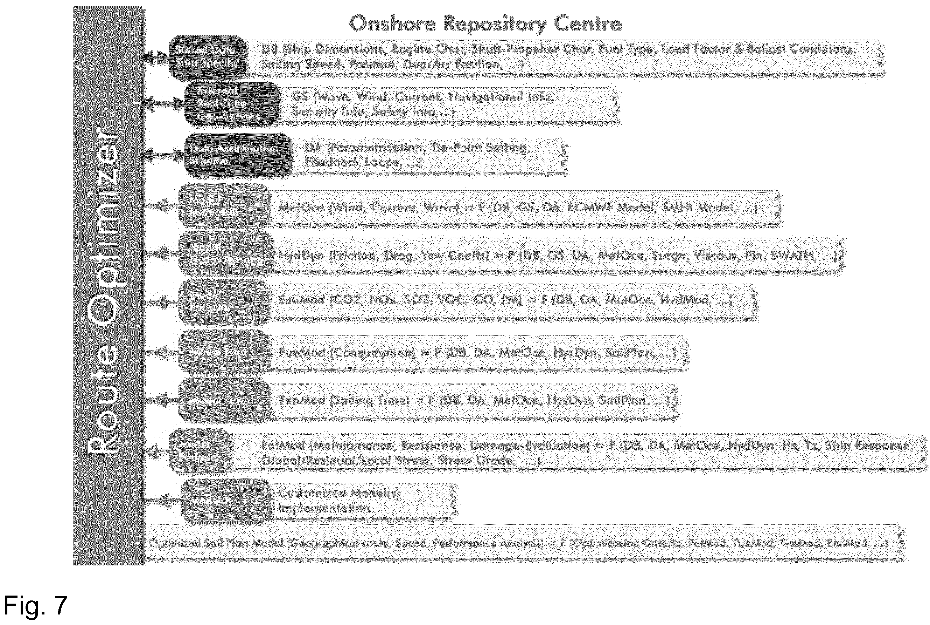

Figure 7 shows a schematic diagram of the main modules of the sail plan optimizer at the ORC according to embodiments of the disclosure. The remote sensing observations will be managed jointly in a 'Remote sensing observation ingestion module' feeding into the 'External real-time geo-services' module of the route optimizer.

The sub-models are contained in two categories: The primary sub-models provide the essential inputs for the route optimization model while secondary models are optionally included into SPS 200 to further enhance its multi-objective optimization capabilities. There can be many different models under each category, for instance, there could be several hydro dynamical models running in parallel. This is advantageous since which of those models are performing better is not clear at the beginning of sailing. But, thanks to the MPMA, the system will learn which of those are performing better under any specific condition over time.

The primary sub-models, being metocean, hydrodynamic, fuel, emission and time/ETA models, are used for the calculation of the core optimization criteria: fuel consumption, ship emissions and sailing time. The metocean and hydrodynamic models provide the essential metocean parameters including the ocean waves (height, speed, direction, spectrum), wind (speed and direction), current (speed and direction), and sea ice conditions (extent, concentration, drift direction and drift speed), all of which affect the time, and fuel consumption required to sail from point A to point B, while the fuel and emission models provide rates for fuel consumption and air emissions. All together these model outputs form the inputs to the route optimization model based on which it performs its iterative calculations. It is important to note that the accuracy, and thereby the value, of the optimized sail plan is a function of the ability to predict/know as accurate as possible the weather/sea states as they will be along the route that is to be sailed. However, the way by which numerical forecast models work, makes them inherently sensitive to inaccuracies in their initial state set-up. Set-up inaccuracies can propagate throughout the prediction models as it uses an iterative process to predict further in time, in which earlier model outputs are reused as input for the next initial state set-up. As such, small inaccuracies can snowball into large prediction errors the further in time the model predicts, or in other words, small deviations (errors) in initial set-up can result in radically different metocean parameter estimates further along the route. To minimize forecast errors local real-time observations along the route are used to adjust model outputs and to reset the models' initial state to more accurate values. This 'adjustment' is performed by controlling the forecast models' nowcast to actual in-situ and multi-platform/multi-sensor observations. Moreover, by using both 'adjusted' forecasts, several different forecast models, and a quality controlling 'feedback loop' mechanism, the sail plan system becomes less sensitive to weather/metocean forecast errors.

Secondary sub-models, like fatigue models to calculate structural stress and optimize asset preservation, diagnostic and prognostic models for ship components, passenger comfort optimization models, etc., are optionally included into the end-users configuration of SPS 200. Secondary sub-models will enhance the capabilities of SPS 200 to go beyond traditional route optimization for fuel reduction and optimized ETA and will allow for additional operational cost reductions for the shipping industry as well as risk reduction, cargo preservation, etc.

Using an open design sub-model set-up for SPS 200 provides several advantages to the system. Firstly, the proposed concept is generic and can include any number of sub-models from several providers or research and development centers. This allows the best performing models to be utilized and creates a flexible structure for future optimization applications. Furthermore, the sub-models operate in parallel and they are all able to respond to the continuous feed of real-time observational data. This means that real-time observational data is used to adjust/optimize the sub-models, if necessary, as to increase the quality of the model outputs. Sub-model performance is monitored by the Model Performance Monitoring and Analysis (MPMA) module, which will be discussed below. Finally, the more vessels, geo-servers, and observations are attached to the ORC the better will be the temporal/spatial sampling of (satellite and other) observations and thereby the quality of the model outputs and thus the optimized sail plan. The next section discusses the importance of having input data diversity and 'ground truth' reference data.

As described above, a fundamental truth to numerical models like metocean, weather forecast and hydrodynamic models is that their output accuracy is limited by the quality of the available input data, with quality meaning the usability of the available data and its inherent characteristics for providing exactly that what the model(s) need(s) to perform optimally. The inherent characteristics of observation data are determined by the specific design of the sensor used to obtain the data. Because every sensor has its observational strengths and weaknesses, SPS 200 uses a multitude of sensors, providing a full spectrum of data and data characteristics that compensates the disadvantage of one sensor by the advantages of another. In other words, the innovative aspect of SPS 200 is that the sensor suite is chosen in such a way that the sensors' capabilities partly overlap and complement each other to form a comprehensive oceanographic and meteorological observation system.

A Data Selection Algorithm (DSA) is used to select the most suitable and reliable data source from among the multitude of available data inputs. The DSA will be discussed in more detail below.

Advantages of this 'sensor-combo' approach are, in the first place, an 'all-weather' observation capability for SPS 200, as observational degradation due to weather conditions of a certain sensor is compensated by the advantages of another. Secondly, the all-weather multi-sensor system is further enhanced by incorporating 'real-time' observations (or interpretations of real-time observations) from both in-situ/local sensor platforms (the ship itself and ships in the same geographical area) and remote observations (satellites, coastal stations, drifters, platforms, airplanes, etc.). The importance of real-time observational data cannot be overlooked as it is essential in evaluating sub-model performance and in adjusting the models to better performance. Thirdly, the inclusion of Earth Observation (EO) satellites into the observational system provides a whole new set of benefits that help increase the innovative character of SPS 200. The importance and innovative character of including EO data into SPS 200 is discussed separately in the next section.

Furthermore a generic sail plan module for sensor integrations allows an unlimited number of different sensor types to be accommodated in the system. The following table provides a non-exhaustive overview of the satellite sensor types that contribute to the SPS sensor suite.

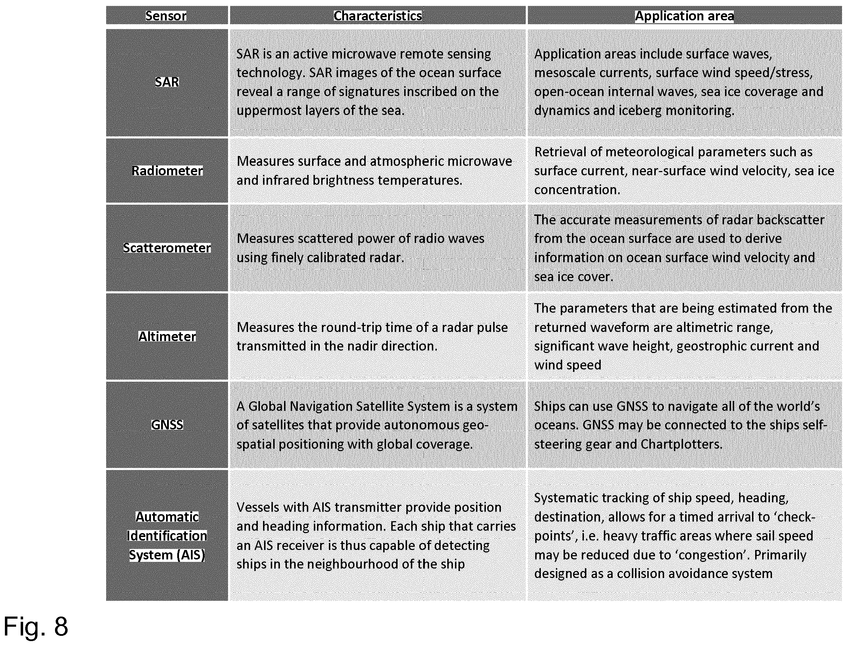

Figure 8 shows a list of satellite sensors included in the actual SPS system (non-exhaustive list). The complete observational capabilities of SPS (all-weather, in-situ, remote, real-time, SAR, Altimeter, GNSS, etc.) and the exchange of all observational data through the central ORC, turns the observational system into a system of numerous other systems, effectively increasing the systems' accuracy, consistency and spatial and temporal resolution, thus allowing for a 24/7, complete, extended and high quality surveillance of all connected ships' surroundings.

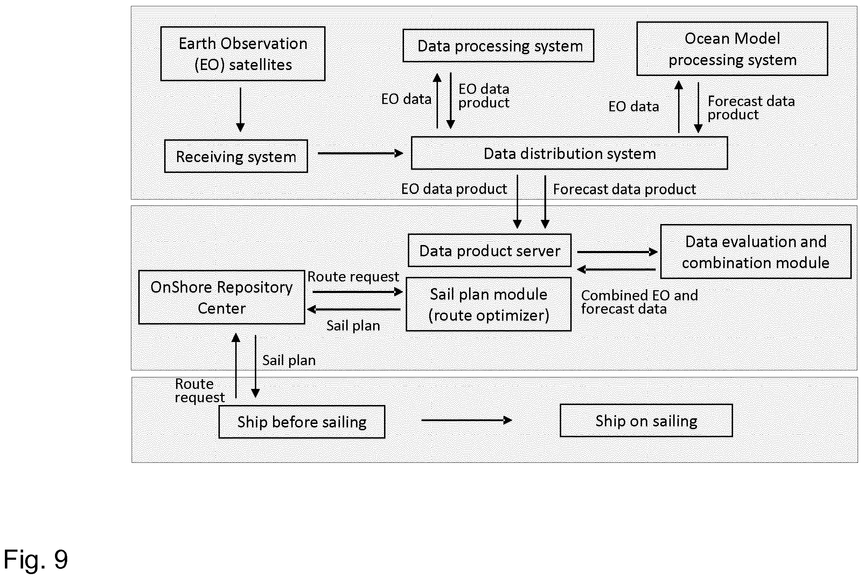

Figure 9 shows a schematic diagram illustrating how Earth Observation (EO) data can be integrated and utilized in the SPS system 200. Earth Observation (EO) data can have a central role in the proposed system.

Traditionally, weather forecast and hydrodynamic models are used to obtain the metocean parameters (waves, wind, current and sea ice conditions) that are essential in the sail plan optimization process. However, most of these parameters can be directly or indirectly observed repeatedly and consistently in real-time by various EO satellite systems with accuracies that are unprecedented compared to what is traditionally available today for such tasks. When one compares the availability and reliability of these space-derived observations to what the shipping community actually are using today there is a very significant gap. Even if the space-derived input observations are not 'perfect' (in terms of temporal/spatial resolution, geophysical parameter extraction errors, etc.), the value of these observations for the shipping community is significant.

An overview of existing and near-future wind, waves, current, sea ice concentration and drift, in addition to ship positions information, platforms, sensors and data feeds are discussed below.

*Wind:* The main EO data source for wind speed and wind direction is scatterometers, like the Advanced SCATterometer (ASCAT) on-board the EUMETSAT MetOp-A and MetOp-B satellites. ASCAT wind products at 25 km resolution are available regionally approximately 30 minutes after they have been acquired and global products approximately 2.5-3 hours after acquisition. ASCAT wind fields are currently not available close to the coast. An algorithm for retrieval of wind velocities from C-band (5 GHz) Synthetic Aperture Radar (SAR) data has been implemented. These data give wind fields with a finer spatial resolution (up to 5 km), but are available less frequently and mainly in coastal regions. Data from the C-SAR sensor on board Sentinel-1 is operationally used for surface wind retrievals from an in-house algorithm. An ocean wind field level-2 product from Sentinel-1 is also used.

*Current*: The primary EO data source for surface current is radiometers, like the Advanced Very High Resolution Radiometer (AVHRR/3) sensors. Currently there are AVHRR/3 sensors on NOAA-15, 16, 17, 18, 19 and on the MetOp A and MetOp B satellites The orbits are timed to allow complete global coverage twice per day, per satellite (normally a daytime and a night time view of the earth) in swaths of about 2,600 km in width. AVHRR Level 1 b data are available at 1.1 km or 4 km resolution. With a pixel resolution of 1.1 km, an area of 10x10 km resolution is considered as statistically significant for retrieval of advective surface current velocities. Advective surface current velocities are measured using the Maximum Cross Correlation (MCC) method for cloudless pixels of brightness temperature data. The algorithm has been tested with data provided through the Comprehensive Large Array-data Stewardship System (CLASS) from the National Oceanic and Atmospheric Administration (NOAA). Geostrophic surface currents is also retrieved from altimeter data. The Archiving, Validation and Interpretation of Satellite Oceanographic (AVISO) group provides estimations of the geostrophic currents by using finite differences on the mean sea level anomaly (MSLA) data from the altimeters onboard Jason-1, Jason-2 and Envisat satellites (AVISO 2011). The absolute geostrophic velocities are computed using the algorithm. In addition, techniques for derivation of ocean currents from Doppler shift in SAR (Synthetic Aperture Radar) images are used. This technique gives good results regionally. The Surface Radial Velocity (RVL) component, a level-2 product from Sentinel-1, is a product that is based on the Doppler shift and included. Another source of surface current information is the Ocean Surface Current Analysis Real time (OSCAR). OSCAR assimilates data from various satellites and in-situ sensors to estimate surface currents in a 1 or 3 degrees grid with 5 day resolution.

*Waves:* Altimeter data directly provide measurements of mean sea level and significant wave height. However, spaceborne Synthetic Aperture Radar (SAR) is still the only instrument providing continuous two-dimensional (2-D) ocean wave measurements on a global basis. The wave mode data products, which are e.g. available from Synthetic Aperture Radar (SAR) observations or missions, give an estimation of the wave spectra and is implemented. For derivation of the wave spectra, nonlinear inversion using information from a numerical wave model such as WAM is used. An alternative is to use an empirical algorithm (such as CWAVE) that yields integral ocean wave parameters such as SWH (Significant Wave Height) or mean period directly from the C-band Synthetic Aperture Radar (SAR) image. This algorithm does not require a wave model first guess and has the calibrated SAR images as the only source of information. CWAVE is an empirical algorithm based on a quadratic function with 22 input parameters. These parameters include the radar cross section, the image variance and 20 parameters computed from the Synthetic Aperture Radar (SAR) image variance spectrum. The proper quadratic function is obtained by fitting to the training dataset based on a stepwise regression method. The algorithm has been validated against buoy and altimeter data. The validation between SAR results and in situ data shows a root mean square error (RMSE) of 0.61 m in the SWH. Another data source assimilated in the system is the Ocean Swell Spectra (OSW) component, provided as a level-2 product generated from the Stripmap and Wave modes from Sentinel-1.

*Sea ice extent and concentration:* The main EO data source for sea ice concentration and sea ice extent is the microwave radiometers such as the Special Sensor Microwave Imager (SSM/I) and the more recent Special Sensor Microwave Imager/Sounder (SSMIS). Sea ice concentration maps produced with radiometer data are made available by several service providers, but not always in near real time. To get near real time processing, the NASA/Team2 algorithm is implemented. Microwave radiometers provide good geographical coverage and high update rates, but at coarse spatial resolution. In areas where fine spatial resolution is required, SAR data is used. An algorithm for retrieval of sea-ice concentration from C-band SAR data is used. Detailed autocorrelation statistics are derived and adopted by the algorithm and a neural network is used for training against sea ice charts produced by professional ice analysts. The classification of open water pixels is accurate to 94% on average, and the classification of sea ice pixels has an accuracy of 87%.

*Sea ice drift:* Sea ice drift is retrieved from passive microwave radiometers or scatterometers, both with good geographical coverage and high update rates, but at coarse spatial resolution. Ice drift maps produced with these sensors data are made available by several service providers. A sea ice drift algorithm for high resolution wide swath Synthetic Aperture Radar (SAR) data has been developed and implemented. The algorithm computes the motion field that resembles the motion of the sea ice between two satellite image acquisitions. The images need to be separated in time and cover the same area.

*Position:* Information about position helps to support the interpretation of metocean observations. This can be used to link information observed with one sensor (e.g., shipborne radar) to other information from other sensors. Information about position also has the potential to give information about local surface current if combined with observations from ship sensors. Accurate information about positions is already today received from global navigation satellite systems (GNSS) like GPS and GLONASS. In this field there is a rapid development with new GNSS satellites coming up from Europe (GALILEO), China (COMPASS) and India. Ships are also required to use transponders for the Automatic Identification System (AIS), which collect information about ship locations and movements. So far most AIS systems have been ground based that only give good coverage along the coasts, but new services have emerged using spaceborne AIS systems that give global coverage. All these position sensors and platforms are implemented.

When integrated into the SPS framework, as is shown in figure 9 EO observations have great potential to further improve navigational efficiency. Furthermore, the EO satellite observations are particularly useful to reduce the sensitivity of weather forecast and metocean models errors, as they allow for remote observations of real-time metocean parameters. The Data Selection Algorithm (DSA), discussed in the following, utilizes large quantities of satellite EO data, onboard ship measurement data, in-situ buoys data and so forth, to correct and adjust the most reliable weather forecast information as input for the sail plan system.

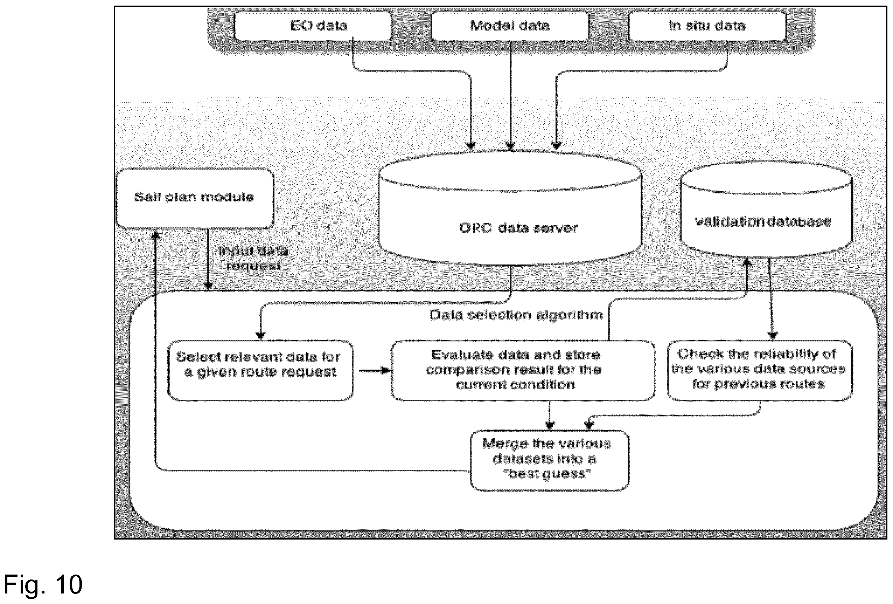

Figure 10 shows a schematic diagram of a functionality of the Data Selection Algorithm (DSA) according to an embodiment of the disclosure.

The Data Selection Algorithm (DSA) is a module designed to produce the best possible forecasts of ocean parameters, such as wind speed and direction, ocean current speed and direction, wave height, etc., out of all the datasets made available by the data repositories connected to the ORC. The main input to the DSA is thus a number of datasets from various sources, i.e. weather forecast models, EO data and in-situ data. The output of the DSA is on the one hand a dataset containing all relevant metocean parameters for a specified geographical region, at a requested spatial resolution and specific moment in time.

On the other hand, the DSA also has a data validation output that feeds a validation database, e.g., MPMA module, containing the quality assessments of the data sources that were used to produce the requested forecast. Incorporating a data source quality check is important because the reliability of a data source often depends on the observational conditions, such as the season, geolocation, ocean state, weather conditions, etc. The DSA is therefore designed to learn for which conditions the various sources are more or less accurate. Validation is done by inter-comparison of EO and weather model input data and by comparison of those to ground truth/reference data (e.g. in-situ ship, buoy, drifter, etc. measurements and other reference data). The results are then stored into a "validation" database. The output forecast dataset produced by the DSA, can be seen as a weighted average of the input datasets, where the weight for each dataset depends on its assessed accurateness.

Having a quality check strongly contributes to the innovative design of SPS 200, effectively creating a self-learning/upgrading ('machine-learning') system that leads to increasingly better optimization performances by having the system incrementally learn which data feeds produce the best forecasts for any specific geographic region, resolution and timing. To assist the DSA and to make sure it is not using/validating degraded data, the system's sensor observation ingestion module also has a built-in self-awareness about its own performance and system health. The system continuously monitors itself and is aware of system degradations, effectively enhancing the self-learning capabilities of SPS 200 even further. Knowledge on data degradation is useful for communicating uncertainties about the total system performance to the end-user. In other words, it allows the sea master to know when there is a degradation of the system and therefore should consider the reduced performance of the system in its decision-making process.

The actual design of the DSA incorporates e.g. one or more of the following:
- High resolution of the validation database which means that instead of calculating one weight for each entire satellite image or EO product, the geographical resolution for which weights are calculated consist of (a) "homogeneous" geographical regions/polygons or (b) evenly spaced grid points. One satellite image or EO product can then cover several polygons or grid points each having different weights.
- Highly detailed comparisons between data by using a high number of reference measurements, i.e. in-situ observations from ships, buoys, HF-radars etc. This also means that with an increased uptake of SPS 200 by end-users there will also be an increase of in-situ measurements by ships, further increasing the data quality assessment process.
- Detailed assessment of data from satellites, models and in situ sensors by taking into consideration that data quality can vary between pixels of a given image (e.g. because of different viewing angles) or that values of ship data can depend on wind direction with regards to position of a wind sensor or any similar data quality degradation.
- Background processes that run "virtual" routes during times of low processing load. As such, there is a continuous collection of quality statistics into the database. The prioritization of which "virtual" routes to run comes from a system of automatic analyses of weaknesses in the database. A typical weakness could be an area along important shipping routes, but where limited data are available in the DSA database.
- Neural network functionalities to improve performance and data reliability learning rate is used to further enhance the overall quality of the DSA outputs.

A maritime infrastructure will be able to request metocean data (e.g. waves, currents, sea/ice) for a specific geographic coordinate. This is done by sending a request from the user interface through a satellite communication link to the ORC. The request will trigger a response that involves executing the Data Selection Algorithm (DSA). The DSA can be according to an example summarized as follows as follows:
1. Start with an empty output matrix;
2. Find a candidate subset of data sets for the requested region;
3. Order data sets according to a cost function;
4. Interpolate the highest ranking data set to fit the boundary of the requested region;
5. Merge interpolated matrix with output matrix;
6. If output matrix is not completely filled, remove actual data set from queue and repeat from step 3, otherwise write binary output file.

The DSA first filters any data sets with an incorrect metocean parameter by matching the filename against a regular expression provided in the configuration file. As a second step it will load the file and check the time stamp. If the acquisition time of the data set is outside of a certain time range, it is automatically discarded. Thirdly a bounding box check is performed and this filters any data sets whose bounding box does not intersect the requested region. The candidate subset selection step may give us more than one candidate. Further processing is needed in order to decide which candidate is most suitable. Hence, we need to find a metric that will order the candidates according to suitability. The main factors that will influence that decision would be:
- Time correlation between the data set acquisition time and the request time;
- Spatial resolution of the data set;
- RMSE (Root Mean Square Error) and bias of the dataset (i.e. quality indicators);
- Correlation between dataset and ship-borne sensor data (i.e. accuracy indicator).

Each of these factors represents a scalar value that provides some information about the suitability of the data set. Which factor is most important? This may vary depending on a number of circumstances and it may not be the same for different metocean parameters. Hence, a linear cost function with adjustable weights has been implemented, so that the selection criteria can be fine-tuned to meet each specific circumstance. The ship's request asserts that the DSA output should have a certain resolution and a certain coverage. The resulting interpolated matrix from the preceding step may or may not have full coverage, depending on the coverage of the original data source. If the output grid is not yet completely filled, then any other candidate data sets that may have additional coverage need to be considered. In this case, the next data set in priority list is checked and the interpolation step is repeated. This is an iterative process where extra information to the output matrix in each iteration will be added.

Ship internal measurements and other external information are used for data quality assessment within the data selection algorithm. The route optimization calculation could, in principle, be based upon input data from one forecast model that provides all necessary variables, but which forecast model should than be chosen? It is not very likely that one model provides better forecast than all other available models for all conditions and regions of the world, and hence, the route optimization calculation will not be based on best available input data. The DSA can be described as a model that is designed to merge/combine data from various sources: forecast data from ocean/atmospheric models, Earth Observations from satellites, ship internal measurements, reference data from ground based radars etc. with the aim to construct a "new" forecast product that on average predicts the weather/ocean as good as, or even better, than the best performing model for various conditions.

A basic task of the DSA is then to characterize and learn the performance of forecast data from various models and for various conditions. This is done by comparing forecast data to observations. It is here assumed that, in terms of accuracy, the various types of data used within SPS are ranked as:
- In-situ (ship, buoy, drifter, etc.) measurements and other 'ground-truth' reference data
- Earth observations from remote platforms and remote sensors
- Numerical weather forecast data

This hierarchy gives that in-situ/reference data can be used to validate both Earth observations and forecast data while validated Earth observation data can be used to validate forecast data. Thus, the key role of ship internal measurements and other reference data is to validate forecast data and Earth observation products. When the typical errors/uncertainties of all available forecast data and Earth observation data is determined for a given observational condition, the DSA will produce a "new" forecast that in general contains information from both forecast models and Earth observation data. The weighting of data from various models and Earth observations depends on their estimated accuracies.

The output data of the actual version of the DSA can be seen as a weighted average of the input EO and model data. The reliability of the input data for various regions, seasons, and conditions (e.g. wind speed) is estimated by comparing the input data against EO-data and in-situ observations from ships, and storing comparison results into a database. The ambition within the proposed innovation is to incrementally improve the DSA by
- Increasing the geographical resolution of the database. Instead of calculating one weight for each satellite image or EO product, we can increase the geographical resolution by calculating weights for (a) "homogeneous" geographical regions /polygons or (b) evenly spaced grid points. One image or product can then cover several polygons or grid points.
- Making more detailed comparisons between data. More reference measurements, i.e. in-situ observations from ships, buoys, HF-radars etc., can be used to validate the various products involved.
- More detailed assessment of data from satellites, models and in situ sensors. The incrementally updated system can e.g. take into consideration that the data quality can vary between pixels of a given image (e.g. because of different viewing angles) and that values of ship data could depend on wind direction with regards to position of wind sensor or any similar sensor observation degradation.
- Running the DSA as a background process. To collect statistics to the database, the DSA can run "virtual" routes in the background during times with low processing load. To focus/prioritize the selection of background missions, the system can be upgraded to run automatic analyses of weaknesses in the database. A typical weakness could be an area along important shipping routes, but where limited data are available in the DSA database.
- Adding further neural network intelligent functionalities in addition to a database implementation. The neural networks can be trained to learn the reliability of data from various sources

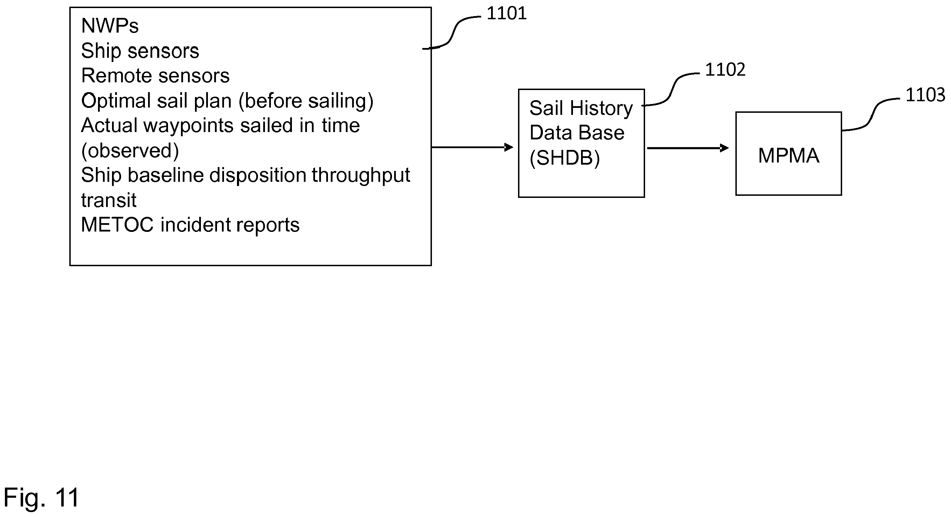

Figure 11 shows a schematic diagram illustrating a workflow of a Model Performance Monitoring and Analysis (MPMA) module 1103 according to an embodiment of the disclosure.

The MPMA module 1103 is part of the feedback loop framework that allows SPS its innovative self-upgrading capabilities. It is in charge of optimizing the performance of SPS through close monitoring and optimization of sub-model performance. This optimization process is based on the analysis of the differences between actual (e.g. actual fuel consumption) and expected performances of the sail plans, effectively creating a 'feedback loop'. The MPMA 1103 is responsible for continuously monitoring the sail plan performance (i.e. arrival-times, fuel-consumption, emissions, etc.) while the ship is underway. This feedback information is assimilated into SPS 200 and a new sail plan is regularly sent to the ship. Thus SPS 200 is adaptive as it takes into account the actual and historical performances. A more technical description of the MPMA 1103 and its workings is described below.

The MPMA 1103 consists of modules for progressive processing of sailed-route data from the Sail History Data Base 1102 (SHDB). The SHDB data files are ascii of various formats-NAPA, VDR, NMEA, Modbus, Kongsberg MDM500, and others. MPMA modules 1103 operating on the data include filtering for steady-state sailing conditions, for dominant modes of operation (medium to high speed, fin deployment), for selected meteorological and oceanographic (metocean) conditions, e.g., wind, currents, waves, and they include processing for extracting empirical ship-resistance parameters (from net overall resistance, to transverse & longitudinal wind resistance and wave resistance). Modules can exchange data using, for example ASCII file formats or any similar file format, according to an embodiment. Module sequencing will be under the command and supervision of expert researchers, for quality assurance, iterative development and validation of ever simpler, and more generally applicable data-analysis methods (across range of input data types), with a view towards scripting module sequence for unsupervised sequencing of modules where possible. Exchange of MPMA empirical sailing data with the route optimizer (coefficients in its hydrodynamic and ship-resistance models, for instance) and for metocean impact reports (Sail Plan Performance Factor (SPPF), which assesses the mean fuel consumption impact) can be likewise through ASCII files.

Nowadays, the probably most interesting objective in the actual industry of sail plan systems is to minimize fuel cost under the expected time of arrival, while accounting for ship, crew, and cargo safety, as well as air emission in certain control areas. To predict/calculate such a multi-objective optimal ship route within reasonable time, a search algorithm (also called the optimization algorithm or a route optimizer) must be utilized. The optimization algorithm works by parameterizing the envisioned voyage into sections between each waypoint. It integrates all sub-model derived parameters that are relevant to each route section in order to calculate section performance values (i.e. arrival times, fuel-consumption, etc.) to each waypoint. The waypoints are then moved from their original location in all accessible directions (i.e. not towards reefs or other danger zones). New performance values are calculated until the optimized route is identified. New observations are subsequently included in the calculations as received by the ORC.

The exact algorithm structure for calculating performance values may vary between models but most rely on the algorithm sampling many route solutions where each solution is calculated based on the sub-model parameter inputs and consequentially penalized or rejected based on certain constraint violation. Rather than the conventional single objective route optimization of only the Estimate Time of Arrival (ETA), the innovative SPS sail-plan system 200 uses advanced generic algorithms "Genetic Algorithm" (GA) that is able to handle multi-objective optimization calculations.

A Genetic Algorithm (GA) is a fairly easy implementation, requiring a minimum of tuning and modification from the base form. The algorithm may be stopped at any time and an optimal solution produced based on a Pareto frontier and ranking. Through mutation, crossover and other specialized operators the algorithm is not likely to become stuck in local minima given proper tuning. From the Pareto frontier the operator has the possibility, through ranking parameters, of selecting a most suitable solution with regards to the Estimate Time of Arrival (ETA), fuel consumption, as well as other user defined criteria such as crew/passenger comfort, motion, structural integrity, etc. While on the other side, the algorithm does not ensure the optimum solution, but will rather give an approximation, it does improve with the number of iterations. The Genetic Algorithm (GA) is not very fast and highly dependent on the population size of the initial generation of solutions thus the selection of first generations may be very influential on the solution as these couples directly to the degree of mutations and crossovers. Some limitations of the Genetic Algorithm (GA) have been improved upon by incorporating the good characteristics of other algorithms, such as pre-mesh/grid generation, pre-defined ship speed/output power ranges, etc.

The main function of the Model Selection Optimizer is to select the best candidate sail plan. More than one candidate sail plan is typically calculated by the route optimizer if there are two or more models in competition for the same task (e.g. two different weather forecasts from two different meteorological organisations). In other words, a key advantage is that the system is not tied to a given model (as seen in conventional systems). The candidate sail plans produced by competing models will be evaluated and the most effective for the local ship location/time/situation will always be selected based on the 'track record' of the MPMA module 1103. When the sea master receives the optimized way-points into the Graphical User Interface (GUI) with the underlining justification (i.e. a performance analysis), the master confirms or rejects the start or modification of the voyage in the GUI, which is then (in case of acceptance) sent to the autopilot. Not only does the master receive the optimum sail plan (in form of way-points), the master will also receive a performance analysis of the calculations justifying the modifications together with other relevant observations (as for example a storm system, dangerous wave zones, security and other relevant information; possibly also an extraction of relevant 'interpreted' satellite observation). The system also monitors how close the captain is following the plan and furthermore assesses if there is any correlation among the events for which the captain eventually decides not to follow the sail plan recommendations.

An important aspect to the SPS system 200 is the development of a user friendly and comprehensive Graphical User Interface (GUI) for presentation and communication of all relevant sail plan information and ship related parameters to help administrative and operational burdens for sea masters. This provides continuous ship performance and safety status updates together with key ship parameters, visualized in real-time locally (at the ship's GUI) and remotely (e.g. ship headquarter GUI) together with key ship parameter conditions, facilitated by the automated sail plan communication between onshore repository center, fleet management and vessels, as to improve overall awareness of fuel, emissions and energy saving. It also means a de-briefing of each voyage and communication of the results by e.g. automatic generation of relevant regulatory input to applicable regulatory bodies (SEEMP, EEDI, MRV, etc.).

Instead of having a standalone Fuel Consumption Module (FCM), there are advantages of an integrated FCM plus SPS 200 effort since the ability of the FCM to assess the effectiveness of any green shipping measure would then also allow for direct assessment of the effectiveness of SPS 200.

Thus, a combination of FCM and SPS 200 would allow for a plurality of sail planning models to be benchmarked against each other and against SPS 200 as to improve parameters like fuel, emissions, ETA, diagnostic/prognostic procedures, feedback for innovative design, and more. It also allows for a standardized way to measure fuel that in turn can be used to measure the effect (and thereby accuracies) of various secondary models needed for the sail plan modelling framework, e.g. the metocean and weather forecast models. Such evaluative information would allow the SPS development team to further validate the self-upgrading SPS service because they would understand which of the alternative innovative technologies currently available on the market should be implemented as the most efficient combination of solutions for the most energy/emission efficient shipping. The addition of response and sail plan models in combination with the FCM can therefore greatly help improve the safety, efficiency and effectiveness of the maritime transport sector by allowing the end-users to take the greatest advantage of a complete solution (compared to any other market player) and, consequently, of a service of unparalleled benefits, including its value/price offering compared to potential competitors.

For this the system incorporates the following unique components: (1) An innovative 'feedback loop' of using both Earth Observation (EO) data and in-situ data to validate model output in order to upgrade ship performance models as an a-posteriori evaluation process. (2) Multi-objective optimization (i.e. optimize for several parameters, e.g. fuel cost, passenger comfort, expected time of arrival etc.) combined with the 'feedback loop' to enable continuous upgrading and improvement of optimization of the total sail plan process. (3) A very large variety of EO data feeds/ weather forecast/ in-situ observations to be less dependent (and independent from) any specific provider. (4) A Data Selection Algorithm (DSA) framework to automatically select the 'best' data (based on input from the 'feedback-loop') at any time and location for any ship. (5) 'Self-learning' models and modules that is being updated based on measurements from the ship's sensors during and after each voyage. (6) EO data to tie/correct weather (now-) forecast to reduce the sensitivity to forecast errors in the modelling framework. (7) Ease of access to an onshore repository center (ORC) that automatically generates relevant info that various stakeholders in the shipping transport sector (incl. maritime authorities) needs for operational status of a specific vessel or fleet, including management access to measurements required for regulatory bodies. (8) Open interface that easily can allow integration of other green shipping concepts as to ease the access and ability to share one or several sub-models or modules, and as such, the system is generic and open to implement clients' required functions for ship navigation. (9) Integrated FCM that allows the team to understand which of the alternative innovative technologies available in the market should be implemented as the most efficient combination of solutions for the most energy/ emission efficient shipping. This in turn allows the end-users to take the greatest advantage of the total solution (compared to any other market player) and, consequently, a service of unparalleled benefits, including its value/price offering compared to potential competitors

From the discussion of the service components above, it is clear that SPS 200 incorporates many innovations that increase its performance, efficiency, reliability and user friendliness and creates a 'complete' service providing system that is self-upgrading, automatic and essentially unmanned. Below briefly lists all the innovations, unique features and other (set-up) benefits that make SPS 200 into this 'complete' solution it is.
- Exploits existing infrastructures by using the infrastructure of SPLASH, SPACENAV, NAVTRONIC and SECTRONIC which as predecessors to SPS 200 already focused on maritime navigation and security and by using the maritime operations center which has been developed by a major R&D consortium and shipping operator to centralize sail planning for a fleet of vessels.
- Includes the powerful ESA GRID network processing and cloud based processing and storage infrastructures to benefit from scaling induced increased performance and to avoid increased processing demand problems.
- Combines the existing infrastructures through the ORC to allow centralized, easy, fast and efficient data access and data exchange, fluid optimization processing chain set-up, and the generation and communication of relevant information required for route plan monitoring and regulatory administration, all culminating into an essentially unmanned, automatic and continuous service provisioning.
- Uses the ORC to collect a very large variety of data feeds from all kind of sources e.g. weather forecast, satellite data, ship in-situ observations, buoy measurements, etc. as to be less dependent as well as independent from any specific data provider or weather forecast model.
- Specifically includes satellite EO data into the data feeds to benefit from EO's unique spatial and temporal observational abilities and to further maximize the independence from single data providers.
- Uses the DSA framework to integrate local observations with real time remote observations, creating a 'feedback-loop' to correct weather now/forecast predictions as to reduce the sensitivity of the modelling framework to forecast errors.
- Uses the DSA framework and its 'feedback-loop' to automatically select the highest quality and most applicable data out of the available large variety.
- Benefits from the local observation scale effect by which collecting in-situ information from each additional vessel will have a leverage effect on the overall effectiveness of the 'feedback-loop' and forecast data correction system.
- Communicates all validation data of the various data feeds, models and modules to the involved scientists and the crew to increase system understanding and experimentation with the goal to further improve the system performance.
- Uses a combination of a plurality of (sub-)models to enable a 'multi-mode' or 'multi-objective' optimization process that can be tailored to specific end-user needs/future optimization applications, rather than using a fixed forecast optimization model.
- Implements a 'self-learning'/'upgrading' process by having a constant feedback-loop through the MPMA framework which mimics the human learning experience, that is, learning from errors, by continuously monitoring sail plan performance through comparison with ground truth information provided by the ships, as to automatically improve the sail plan model.
- Has the MPMA framework concurrently run several (sub-)models instead of one specific (e.g. oceanographic or hydrodynamic) model (as is done in currently available systems) to identify and assess their best features and to ensure the models are used when and where they are best.
- Uses 'open standards' for all interfaces, models and sub-models in contrast to proprietary formats to allow easy integration of new/state-of-the-art green shipping concepts from different providers/research and development centers, essentially creating a generic and flexible system that is open to implement clients' required functions for ship navigation, future optimization needs and unforeseen trends.
- Integrates the FCM that allows to understand which of the alternative innovative technologies available on the market should be implemented as the most efficient combination of solutions for the most energy/emission efficient shipping.
- Has integrated hydrodynamic models which together with real-time high definition local wave, wind, currents and hull stress measurements and near real-time remote observations, provide a unique, accurate and ship specific situation report.
- Uses the ship specific situation report to provide ship fatigue optimization and to further improve the ship fatigue models by direct analysis of stress sensor data and actual sea and wind conditions.
- Includes sea-ice drift and concentration observations into the models, leading to the production of global, near real-time accurate sea ice maps, thus allowing for optimized sea ice routing which is especially important for the anticipated development of shipping in the Polar Regions.
- Incorporates a comprehensive GUI that presents the precise information and optimal sail plan optimization recommendations to the end-user in a user friendly and intuitively understandable way and allows for sea masters to verify the soundness of the system's recommendation, a feature that significantly increases the users trust and faith in the product.

The entire idea behind the modular, open and user-friendly SPS system set-up and the inclusion of state-of-the-art innovations is to allow for a ship performance optimization system that is autonomous and self-upgrading so that it keeps improving over time and will always produce superior solutions compared to existing competitive systems.

Environmental regulatory requirements, together with increasing fuel prices and low freight rates in the future are creating tough economic challenges for the shipping industry. As an example, a big ship can consume up to 380 tons per day. With a fuel price of USD 657/ton, the average fuel price in 2014, fuel consumption costs can be over 200,000 USD/day. Fuel costs rise even higher in Emission Control Areas (ECAs) where ships are obliged to use special low sulphur fuel with prices up to 87% more than commonly used heavy oil. Starting 2020 a similar regulation will be enforced for shipping operations outside ECAs. The environmental impact of the shipping industry is leading to ever more stringent regulations, thus resulting in rising operational costs.

The challenging economic and environmental situation of the shipping industry as described above together with the recent availability of advanced technological solutions has led to the development of a new solution project as proposed in the present disclosure. The final goal of the innovation is to establish SPS 200 (and the fuel consumption estimation model) as a commercially viable and sustainable product/service that will provide an innovative and superior solution to the shipping industry's actual economic and environmental challenges as well as deliver additional services to increase operational shipping efficiency and safety.

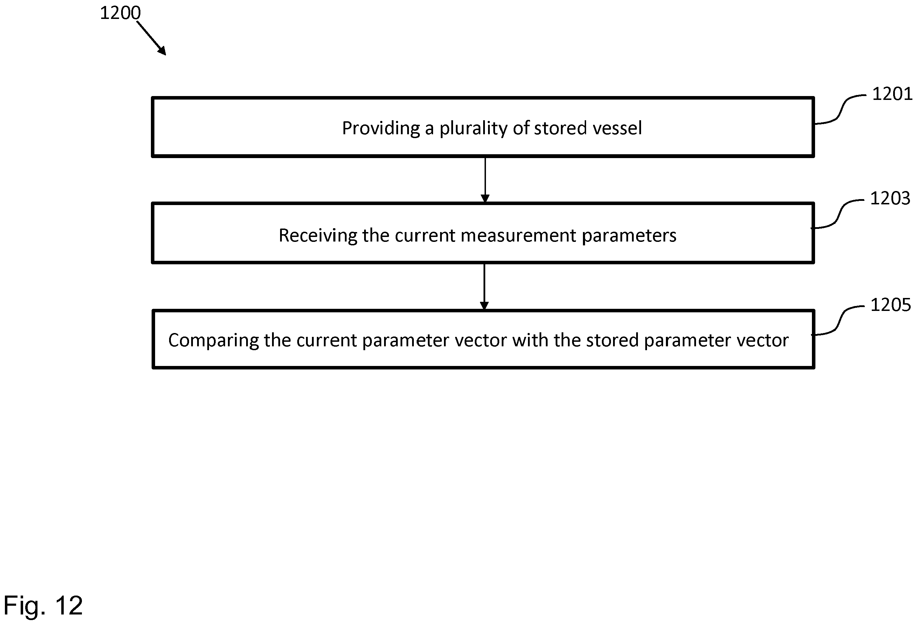

Figure 12 shows a schematic diagram of a method 1200 for adapting an actual route of a vessel in dependence of actual measurement parameters to achieve at least one optimization goal, the actual measurement parameters and the optimization parameter being arranged to form an actual parameter vector according to an embodiment.

The method 1200 includes a first step 1201 of providing a plurality of stored vessel routes by a data base, each stored vessel route being associated with reference measurement parameters and optimization result achieved along the stored route with the reference measurement parameters, the reference measurement parameters and the optimization results forming a stored parameter vector.

The method 1200 includes a second step 1203 of receiving the actual measurement parameters, and a third step 1205 of comparing the actual parameter vector with the stored parameter vector and to determine an optimum route upon the basis of the comparison, the processor being further configured to change the actual route towards the optimum route to obtain an adapted route.

According to an embodiment, various operational criteria and conditions of upcoming voyage requirements are received at an onshore processing center (ORC) from an end-user/sea master prior to departure. The ORC continuously receives available numerical weather forecasts and remote observations from satellites, coastal stations, buoys, aircrafts, etc. along the proposed voyage. Before and during the voyage, the system also collects local in-situ ship observations and navigational information (from the ship and neighboring ships).

This information allows continuous calculation, validation and updating of the originally calculated sail plan. It is frequently sent back to the ship with (updated) waypoints (speed/heading) and optional supporting information. The ship adjusts its speed and heading accordingly. In addition, ship traffic management officers and other related parties (ship owners, charterers, analysts, modellers, data providers, etc.) also (if approved) automatically receive optimized way-points illustrated on a Graphical User Interface (GUI) (standalone, ECDIS or coning) in addition to 'live' ship performance data. This facilitates 'online' communications between stakeholders for continuous 'optimized' decision making, and also produces the required reporting documentation for various existing and upcoming regulations (e.g. the MRV).

Therefore, a Graphical User Interface (GUI) communication platform accessible for all shipping stakeholders can be provided. It is adaptive so additional models, algorithms, data feeds can be 'added' as to validate/verify their qualities to other similar models /data feeds. The possibility for any "competitor" to 'plug-in' their solution to e.g., a SPS 200 platform for it to be tested and validated allows the service to easily be adopted by other providers of sail planning models as well as for the end-users. Easiness of use and reliability are two main barriers for adoption of any sail plan service.

Implementation of the planning system will lead to the average verified advantages:
- A minimum of a 7% decrease in fuel consumption and at least a 7% decrease in CO₂, SOₓ, PM emissions
- 90% correct ETA berth-to-berth (better overall route optimization)
- 40% effort saving concerning navigation functions in sail planning
- 90% effort saving of administration workload as to comply with numerous reporting requirements to various regulatory bodies (e.g. the EU emission control regime)
- 15% extension of a ship's service life, i.e. from 30 to 34.5 years and 20% savings with respect to maintenance and inspection costs (by heavy weather avoidance and structural fatigue modelling)
- 50% reduction in risk during navigation in ice infested waters.

The three greatest differences between the disclosure and other sail plan services are:
- extensive use of a very large plurality of EO data feeds
- a 'feedback loop' algorithm based on 'big-data' and machine learning analytics to utilize past performance to improve future sail plan calculations
- a model framework that allows multi-objective optimization (a sail plan can be optimized e.g. for ETA and emission savings simultaneously utilizing several numerical model parallel runs supported by the machine learning analytics). Parameters such as reduced speed due to wave and wind, engine power at actual speed, required fuel for a nautical mile, required fuel to the destination and to actual location are calculated. Metocean (meteorological-oceanographic) information (prevailing and upcoming), e.g. wind, waves, currents, are provided to the vessel to support awareness and expected upcoming sea state.

The state of the art in terms of providing metocean and sea ice observations derived from earth observation (and particularly space-based) assets are readily available but not 'transferred' to maritime operational use. Moreover, the 'quality checking' of the Earth Observation (EO) to actual observed ship observations using a feedback module limits the possible 'negative' impacts. This utilization will indirectly quantify and qualify the correctness of specific EO algorithms ability to derive geophysical observations. To maximize the value further the service adapts easily (i.e. in a standardized way) additional geophysical remote sensing algorithms in order to facilitate upcoming (satellite) missions or other new EO data feeds.

Furthermore, the identification of performance parameters is derived to help improve past performance by machine learning and also improve (and select) the models and data feeds that provides the best results in various sailing situations, i.e. the feedback-loop identifies which data feeds, algorithms, (sub-)models and procedures are working best and when. This knowledge-base in-turn allows to improve and/or exchange individual data feeds, algorithms, (sub-) models, and (sub-) systems in order to maximize the total system performances; i.e. a functionality that allows this 'e-Service' platform to 'learn' from the past to select 'the best'.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.
Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the disclosure beyond those described herein. While the present disclosure has been described with reference to one or more particular embodiments, those skilled in the art recognize that many changes may be made thereto without departing from the scope of the present disclosure. It is therefore to be understood that within the scope of the appended claims and their equivalents, the disclosure may be practiced otherwise than as specifically described herein.

## Claims

1. Communication apparatus (100) being configured to adapt an actual route of a vessel in dependence of actual measurement parameters to achieve at least one optimization goal, the actual measurement parameters and the optimization parameter being arranged to form an actual parameter vector, the apparatus comprising:
a data base (101) being configured to provide a plurality of stored vessel routes, each stored vessel route being associated with reference measurement parameters and optimization result achieved along the stored route with the reference measurement parameters, the reference measurement parameters and the optimization results forming a stored parameter vector;
an interface (102) for receiving the actual measurement parameters; and
a processor (103) being configured to compare the actual parameter vector with the stored parameter vector and to determine an optimum route upon the basis of the comparison, the processor being further configured to change the actual route towards the optimum route to obtain an adapted route.

2. Communication apparatus (100) of claim 1, wherein the processor (103) is configured to correlate the actual parameter vector with stored parameter vectors in order to determine a selected parameter vector, the selected parameter vector correlating more with the actual parameter vector than another pre-stored parameter vector, and wherein the processor (103) is configured to select the optimum route associated with the selected parameter vector.

3. Communication apparatus (100) according to anyone of the preceding claims, wherein each stored vessel route and/or optimization result is determined upon the basis of executing a different computer route model with the reference measurement parameters as input parameters or empirically determined routes.

4. Communication apparatus (100) according to anyone of the preceding claims, wherein the optimization goal comprises at least one of the following parameters: fuel consumption reduction, emission reduction, travel time reduction, heavy whether avoidance, fatigue/structural stress optimization or a combination thereof, and wherein a respective optimization result comprises fuel consumption, emission, travel time, heavy whether indication or a combination thereof.

5. Communication apparatus (100) according to anyone of the preceding claims, wherein the stored vessel routes are associated with different optimization results.

6. Communication apparatus (100) according to anyone of the preceding claims, wherein the actual measurement parameters and/or the reference measurement parameters comprise at least one of the following parameters: Earth Observation parameters, in particular metocean parameters such as sea ice extent and/or concentration along a respective route, wave indication along the respective route, wind indication along the respective route, or travel time, or fuel consumption, or emissions, or hydro dynamic parameters or vessel specific parameters, in particular vessel dimension, fuel type load conditions, speed, position, engine characteristic, ocean currents (speed/direction), ocean waves (spectrum or period/direction/height), wind (speed/direction), ice drift (speed/direction), ice concentration, and automatic identification of ships (position, speed, heading, departure location, arrival location, MSCI number, and more).

7. Communication apparatus (100) according to anyone of the preceding claims, wherein the actual route is a shortest path route.

8. Communication apparatus (100) according to anyone of the preceding claims, wherein the interface is considered to transmit information on the adapted route towards the vessel.

9. Communication apparatus (100) according to anyone of the preceding claims, wherein the processor is configured to execute a plurality of different computer route models with the reference measurement parameters as input parameters to determine the optimization results.

10. Communication apparatus (100) according to anyone of the preceding claims, wherein the processor is configured to determine at least one optimization result for the actual route with the actual measurement parameters, and to store the optimization result in the data base for the actual route forming a stored route for future optimizations.

11. Communication apparatus (100) of anyone of the preceding claims, wherein the actual parameter vector comprises a plurality of different optimization goals, and wherein the processor is configured to weight the at least one of the optimization goals, in particular according to a user preference.

12. Communication apparatus (100) of claim 11, wherein the interface is configured to receive the user preference and at least one optimization goal.

13. Communication apparatus (100) of anyone of the preceding claims, wherein the processor (103) is configured to continuously determine and/or continuously update a difference, in particular a measured and/or updated difference, between actual and expected performance of the sail route of the vessel, upon the basis of at least one of the following parameters: actual arrival-times, fuel-consumption, emissions.

14. Communication apparatus (100) of claim 4 to 13, wherein the processor is configured to determine whether a fuel/emission reduction parameter is more favorable than another fuel and/or emission reduction parameter, and to use the determined fuel and/or emission parameter to provide the most energy efficient solutions, in particular vessel route.

15. Communication apparatus (100) of anyone of the preceding claims, wherein local actual observations along the vessel route is used to adjust model outputs and to reset the initial state of the models into more accurate values for minimizing forecast errors, wherein the model adjustment is performed by controlling the forecast models' nowcast to actual in-situ observations, wherein a quality controlling feedback-loop mechanism is used together with the adjusted forecasts and several different forecast models to reduce the errors of weather forecast and meteorological and oceanographic forecast.

16. Communication apparatus (100) of anyone of the preceding claims, wherein any number of sub-models, in particular from several providers or research and development centers, can be included into the process for calculating at least one optimization vessel route, in particular sail plan route, wherein the sub-models are operable in parallel and are configured to respond to the continuous input of actual observational data.

17. Communication apparatus (100) of anyone of the preceding claims, wherein a spectrum, in particular a full spectrum, of data is provided by a multitude of sensors and is included in the actual parameter measurements.

18. Communication apparatus (100) of anyone of the preceding claims, wherein observational data measurements from earth observation satellites are included into the actual parameter measurements to reduce the sensitivity of meteorological and oceanographic model errors and weather forecast errors.

19. Communication apparatus (100) of anyone of the preceding claims, wherein the processor (103) is configured to utilize, in particular large quantities, of at least one of the following data: satellite earth observation data, onboard ship measurement data, in-situ buoys data, to correct and adjust the most reliable weather forecast information.

20. Method (1200) for adapting an actual route of a vessel in dependence of actual measurement parameters to achieve at least one optimization goal, the actual measurement parameters and the optimization parameter being arranged to form an actual parameter vector, the method comprising:
providing (1201) a plurality of stored vessel routes by a data base, each stored vessel route being associated with reference measurement parameters and optimization result achieved along the stored route with the reference measurement parameters, the reference measurement parameters and the optimization results forming a stored parameter vector;
receiving (1203) the actual measurement parameters; and
comparing (1205) the actual parameter vector with the stored parameter vector and to determine an optimum route upon the basis of the comparison, the processor being further configured to change the actual route towards the optimum route to obtain an adapted route.

## Amended claims

### Amended claims in accordance with Rule 137(2) EPC.

1. Communication apparatus (100) being configured to adapt an actual route of a vessel in dependence of actual measurement parameters to achieve at least one optimization goal, the actual measurement parameters comprising at least Earth Observation (EO) parameters, the optimization goal comprising at least a fuel consumption reduction, the actual measurement parameters and an optimization parameter being arranged to form an actual parameter vector, the actual parameter vector comprising a plurality of different optimization goals, the apparatus (100) comprising:
a data base (101) being configured to provide a plurality of stored vessel routes, each stored vessel route being associated with reference measurement parameters and optimization result achieved along the stored route with the reference measurement parameters, the reference measurement parameters comprising at least Earth Observation (EO) parameters, a respective optimization result comprising at least a fuel consumption, the reference measurement parameters and the optimization results forming a stored parameter vector;
an interface (102) for receiving the actual measurement parameters; and
a processor (103) being configured to compare the actual parameter vector with the stored parameter vectors and to determine an optimum route upon the basis of the comparison, the processor (103) being further configured to change the actual route towards the optimum route to obtain an adapted route;
wherein the processor (103) is configured to weight at least one of the optimization goals according to a user preference.

2. Communication apparatus (100) of claim 1, wherein the processor (103) is configured to correlate the actual parameter vector with stored parameter vectors in order to determine a selected parameter vector, the selected parameter vector correlating more with the actual parameter vector than another pre-stored parameter vector, and wherein the processor (103) is configured to select the optimum route associated with the selected parameter vector.

3. Communication apparatus (100) according to anyone of the preceding claims, wherein each stored vessel route and/or optimization result is determined upon the basis of executing a computer route model with the reference measurement parameters as input parameters.

4. Communication apparatus (100) according to anyone of the preceding claims, wherein the optimization goal comprises at least one of the following parameters:
emission reduction, travel time reduction, heavy whether avoidance, fatigue/structural stress optimization or a combination thereof, and wherein a respective optimization result comprises emission, travel time, heavy whether indication or a combination thereof.

5. Communication apparatus (100) according to anyone of the preceding claims, wherein the stored vessel routes are associated with different optimization results.

6. Communication apparatus (100) according to anyone of the preceding claims, wherein the actual measurement parameters and/or the reference measurement parameters comprise at least one of the following parameters: wave indication along the respective route, wind indication along the respective route, or travel time, or fuel consumption, or emissions, or hydro dynamic parameters or vessel specific parameters, in particular vessel dimension, fuel type load conditions, speed, position, engine characteristic, ocean currents, in particular speed or direction, ocean waves, in particular spectrum or period or direction or height, wind, in particular speed or direction, ice drift, in particular speed or direction, ice concentration, and automatic identification of ships, in particular position or speed or heading or departure location or arrival location or MSCI number.

7. Communication apparatus (100) according to anyone of the preceding claims, wherein the actual route is a shortest path route.

8. Communication apparatus (100) according to anyone of the preceding claims, wherein the interface is considered to transmit information on the adapted route towards the vessel.

9. Communication apparatus (100) according to anyone of the preceding claims, wherein the processor is configured to execute a plurality of different computer route models with the reference measurement parameters as input parameters to determine the optimization results.

10. Communication apparatus (100) according to anyone of the preceding claims, wherein the processor is configured to determine at least one optimization result for the actual route with the actual measurement parameters, and to store the optimization result in the data base for the actual route forming a stored route for future optimizations.

11. Communication apparatus (100) of anyone of the preceding claims, wherein the interface is configured to receive the user preference and at least one optimization goal.

12. Communication apparatus (100) of anyone of the preceding claims, wherein the processor (103) is configured to continuously determine and/or continuously update a difference, in particular a measured and/or updated difference, between actual and expected performance of the sail route of the vessel, upon the basis of at least one of the following parameters: actual arrival-times, fuel-consumption, emissions.

13. Communication apparatus (100) of claim 4 to 12, wherein the processor is configured to determine whether a fuel/emission reduction parameter is more favorable than another fuel and/or emission reduction parameter, and to use the determined fuel and/or emission parameter to provide the most energy efficient solutions, in particular vessel route.

14. Communication apparatus (100) of anyone of the preceding claims, wherein local actual observations along the vessel route is used to adjust model outputs and to reset the initial state of the models into more accurate values for minimizing forecast errors, wherein the model adjustment is performed by controlling the forecast models' nowcast to actual in-situ observations, wherein a quality controlling feedback-loop mechanism is used together with the adjusted forecasts and several different forecast models to reduce the errors of weather forecast and meteorological and oceanographic forecast.

15. Communication apparatus (100) of anyone of the preceding claims, wherein any number of sub-models, in particular from several providers or research and development centers, can be included into the process for calculating at least one optimization vessel route, in particular sail plan route, wherein the sub-models are operable in parallel and are configured to respond to the continuous input of actual observational data.

16. Communication apparatus (100) of anyone of the preceding claims, wherein a spectrum, in particular a full spectrum, of data is provided by a multitude of sensors and is included in the actual parameter measurements.

17. Communication apparatus (100) of anyone of the preceding claims, wherein observational data measurements from earth observation satellites are included into the actual parameter measurements to reduce the sensitivity of meteorological and oceanographic model errors and weather forecast errors.

18. Communication apparatus (100) of anyone of the preceding claims, wherein the processor (103) is configured to utilize at least one of the following data: satellite earth observation data, onboard ship measurement data, in-situ buoys data, to correct and adjust the most reliable weather forecast information.

19. Method (1200) for adapting an actual route of a vessel in dependence of actual measurement parameters to achieve at least one optimization goal, the actual measurement parameters comprising at least Earth Observation (EO) parameters, the optimization goal comprising at least a fuel consumption reduction, the actual measurement parameters and an optimization parameter being arranged to form an actual parameter vector, the actual parameter vector comprising a plurality of different optimization goals, the method comprising:
providing (1201) a plurality of stored vessel routes by a data base, each stored vessel route being associated with reference measurement parameters and optimization result achieved along the stored route with the reference measurement parameters, the reference measurement parameters comprising at least Earth Observation (EO) parameters, a respective optimization result comprising at least a fuel consumption, the reference measurement parameters and the optimization results forming a stored parameter vector;
receiving (1203) the actual measurement parameters;
weighting at least one of the optimization goals according to a user preference;
comparing (1205) the actual parameter vector with the stored parameter vectors;
determining an optimum route upon the basis of the comparison; and
changing the actual route towards the optimum route to obtain an adapted route.
